# EUROPÄISCHE PATENTSCHRIFT

(11) **EP 0 672 927 B1**
(45) Veröffentlichungstag und Bekanntmachung des Hinweises auf die Patenterteilung: **07.01.1998**
(21) Anmeldenummer: 95103798.5
(22) Anmeldetag: 16.03.1995
(51) Int. Cl.: G02B 6/46

(54) **Verteilerplatte und Verteilerbox mit einer Mehrzahl von optischen Lichtwellenleiter-Stecksystemen**
Distribution plate and distribution box with a plurality of optical fiber plug systems
Tableau de distribution et boîte de distribution avec multiples systèmes des connecteurs à fibres optiques

(30) Priorität: 16.03.1994 DE 9404380 U; 27.05.1994 DE 4422139
(43) Veröffentlichungstag der Anmeldung: 20.09.1995
(73) Patentinhaber: CLA-SON Leasing und Holding GmbH, 67269 Grünstadt (DE)
(72) Erfinder: Grässer, Edmond, 67269 Grünstadt (DE)
(74) Vertreter: Mierswa, Klaus, Dipl.-Ing.

(56) Entgegenhaltungen:
- EP-A- 0 293 183
- EP-A- 0 501 336
- DE-U- 9 210 645
- US-A- 4 832 436

## Beschreibung

### Technisches Gebiet:

Die Erfindung betrifft eine Verteilervorrichtung für Lichtwellenleiterkabel gemäß dem Oberbegriff des Anspruchs 1.

### Stand der Technik:

Es sind Verteilerschränke für Lichtwellenleiterstecker und -kupplungen bekannt, die in rechteckförmigen Einschubboxen, vorzugsweise in 19-Zoll-Technik, übereinander angeordnet sind, wobei sich innerhalb der Verteilerschränke ein Montagechassis befindet, an denen Verteilerboxen festgeschraubt werden. Dieses Montagechassis können Gefache sein, ebenso wie es bekannt ist, an senkrechten Lochschienen Tragbleche anzuschrauben, die die Verteilerboxen haltern. Gewöhnlich weisen die Verteilerboxen ein vorderes Frontblech bzw. Verteilerblech auf, in welchem eine Anzahl von nebeneinanderliegenden Aussparungen angeordnet sind, in denen Stecker bzw. Kupplungen angeordnet sind. Die Kabel der im Frontblech angeordneten Verbindungsteile führen nach hinten weg; die Kabel der aufgesteckten Verbindungsteile werden seitlich ungefähr waagrecht auf die Seite geführt, oder die Kabel der gesteckten Teile werden direkt unterhalb der Frontbleche durch eine Kabelführung ebenfalls in das Innere des Verteilerschrankes gesteckt.

Durch die DE-U1-9210644.7 und DE-U1-9210645.5 sind Verkabelungs- und Installationssysteme für mit Lichtwellenleitern bestückte Anlagen bekanntgeworden, deren Verbindungsstellen voneinander getrennt sind und die aus einer Anzahl von einzelne Anschlußgehäuse aufnehmenden Schränken oder Gestellen bestehen, wobei in jedes Anschlußgehäuse ein zu einem Kabel zusammengefaßtes Lichtwellenleiterbündel mündet und die Lichtwellenleiter innerhalb des Anschlußgehäuses aufgeteilt und mit an einer Frontplatte des Anschlußgehäuses angeordneten Anschlußkupplungen zugfest verbunden sind. Halterungen wie Anschlußgehäuse sind fest an den Schränken oder Gestellen verschraubt.

Durch die EP 0 293 183 B1 ist eine Verteilertafel für Lichtwellenleiterkabel bekanntgeworden, bestehend aus einem Gehäuse mit einer Mehrzahl von Wänden, mit einem Verbindermodul zur Halterung einer Anzahl von Verbinderbuchsen, die entlang einer Vorderkante des Moduls positioniert sind und in die je ein Leiter eines Übertragungskabels geführt ist. Die Verbinderbuchsen sind schräg innerhalb einer streifenförmigen Halterung angeordnet, die die vordere Begrenzungswand des Moduls darstellt und wozu diese eine Vielzahl von zickzackförmigen, 90 Grad-Abwinkelungen aufweist. Der gesamte Modul kann aus dem Gehäuse herausgeschwenkt werden, damit die Verbinderbuchsen zugänglich sind.

Mit Lichtwellenleitern bestückte Stecksysteme, also Kupplungen und/oder Stecker, vorzugsweise an beiden Enden, müssen in aller Regel schon beim Hersteller fertig konfektioniert und beidendig mit den Kupplungen oder den Steckern oder den sonstigen Verbindungsgliedern versehen werden, weil die Endmontage der Lichtwellenleiter aufgrund ihrer Schwierigkeit und der erforderlichen Genauigkeit vor Ort gewöhnlich nicht durchgeführt werden kann. Nun tritt häufig die Forderung auf, derartige mit Lichtwellenleitern bestückte Stecksysteme durch Rohre zu ziehen, um beispielsweise zwei entfernt liegende Gebäude, die zum Beispiel miteinander kommunizierende Rechner beinhalten, mit derartigen Lichtwellenleitern zu verbinden. Da in einem derartigen Fall die Verteilerplatte bzw. die gesamte Verteilerbox durch das Rohr gezogen werden muß, müssen bisher teure Rohre mit großem Durchmesser für einen vergleichsweise geringen Kabeldurchmesser der Lichtwellenleiter verwendet werden.

### Technische Aufgabe:

Der Erfindung liegt die Aufgabe zugrunde, ein Verteilervorrichtung der eingangs genannten Gattung zu schaffen, die den notwendigen Kabelraum verkleinert und insbesondere insgesamt mit fertig konfektionierten Lichtwellenleitern mit Stecksystemen, also Kupplungen und/oder Steckern, durch enge Rohre oder durch relativ kleine Mauerdurchbrüche gezogen oder gesteckt werden kann.

### Offenbarung der Erfindung:

Die Lösung der Aufgabe besteht erfindungsgemäß in einer Verteilervorrichtung für Lichtwellenleiterkabel, wie in Anspruch 1 definiert. Sie besteht aus einer frontseitigen Verteilerplatte und einer Mehrzahl von optischen Lichtwellenleiter-Stecksystemen, wie Kupplungen und/oder Stecker mit Lichtwellenleiterkabeln, wobei die Verteilerplatte die Form eines Rechtecks mit einer Mehrzahl von Aussparungen hat, die in Längsrichtung der Verteilerplatte nebeneinander angeordnet sind und in denen die Lichtwellenleiter-Stecksysteme angeordnet sind, welche die Verteilerplatte in den Aussparungen durchragen und von der Vorderseite der Verteilerplatte zugänglich sind, wobei jedes einzelne Lichtwellenleiter-Stecksystem in der Verteilerplatte schwenkbar um eine Achse senkrecht zur Längsrichtung und zur Flächennormale der Verteilerplatte angeordnet ist. Die Lichtwellenleiter-Stecksysteme schließen bei Auslenkung aus der Richtung der Flächennormalen mit der Verteilerplatte einen vorgebbaren Schwenkwinkel (α,β) ein, der zwischen 0 und 90 Grad liegt und für alle Lichtwellenleiter-Stecksysteme gleich ist. Damit ist die in Richtung der Flächennormalen gemessene Tiefe der Verteilervorrichtung, d.h. der Verteilerplatte mitsamt den Lichtwellenleiter-Stecksystemen, veränderbar und insbesondere gegenüber der Tiefe im Fall der Anordnung der Stecksysteme senkrecht zur Verteilerplatte verringert.

Vorzugsweise weist die Verteilervorrichtung Seitenwände auf, die an die Verteilerplatte in Längsrichtung seitlich angreifen und die, vorzugsweise mittels Scharnieren, relativ zur Verteilerplatte beweglich schwenkbar angeordnet sind und stets den gleichen Schwenkwinkel wie die Lichtwellenleiter-Stecksysteme einnehmen. Dadurch ist ebenfalls die in Richtung der Flächennormalen gemessene Tiefe des Verteilervorrichtungs, d.h. der Verteilerplatte mitsamt den Lichtwellenleiter-Stecksystemen und den Seitenwänden, veränderbar, insbesondere gegenüber der Tiefe im Fall der Anordnung der Stecksysteme und der Seitenwände senkrecht zur Verteilerplatte verringert.

Desweiteren können die Lichtwellenleiter-Stecksysteme an einer relativ zur Verteilerplatte schwenkbaren Halterung befestigt sein, wobei die Schrägstellung der Stecksysteme mittele einer Verriegelung arretierbar ist.

Die Verteilervorrichtung stellt eine Verteilerbox dar, wenn es zusätzlich zu den seitlich angreifenden Seitenwänden mit Deckwänden ausgestattet ist, wobei die Seitenwände und gegebenenfalls die Deckwände beweglich schwenkbar angeordnet sind, die Seitenwände relativ zu den Deckwänden beweglich und die Deckwände zusammenklappbar sind, so daß sich auch die Tiefe der Verteilerbox, in Richtung der Flächennormalen der Verteilerplatte gemessen, durch die Schrägstellung der Stecksysteme sowie der Seitenwände und durch Einklappen der Deckwände verringern läßt.

Bei einer besondere Ausgestaltung einer derartigen Verteilerbox sind die Seitenwände seitlich an der Verteilerplatte mittels Scharnieren beweglich gehaltert, jedes Lichtwellenleiter-Stecksystem ist an je einer Halteplatte befestigt, die an wenigstens zwei sich diagonal gegenüberliegenden Ecken, vorzugsweise an allen vier Ecken, mittels Zapfen schwenkbar gehaltert ist, die vorderen, der Verteilerplatte benachbarten Zapfen greifen in Löcher einer oberen und einer unteren, an der Verteilerplatte befestigten Schiene ein und die hinteren, der Verteilerplatte abgewandten Zapfen sind drehbar in Löchern von mindestens einer Schubstange gehaltert, die ihrerseits zwischen den Seitenwänden der Verteilerbox drehbar gehaltert sind, wobei die vorderen Zapfen die Mittel-punkte der kreisförmigen Schwenkbewegung sind, so daß bei einer Parallelogrammverschiebung oder sonstigen Verschwenkung der Seitenwände diese seitlich um die Schmalkanten der Verteilerplatte unter Mitnahme der Schubstangen sowie sämtlicher Lichtwellenleiter-Stecksysteme schwenkbar sind.

Weitere Ausgestaltungen der Erfindung sind in den übrigen Unteransprüchen gekennzeichnet.

Kurzbeschreibung der Zeichnung, in der zeigen:
- Figur 1: ein Beispiel einer Verteilervorrichtung in Form einer Verteilerbox in Front- oder Vorderansicht mit einer einstückigen Verteilerplatte
- Figur 2: einen Schnitt längs der Linie D-D in Figur 1 in Draufsicht
- Figur 3: eine Vorderansicht der Verteilerbox aus Figur 1 im zusammengeklappten Zustand der Verteilerbox
- Figur 4: die Schnittansicht der Figur 2 im zusammengeklappten Zustand der Verteilerbox
- Figur 5: einen Schnitt längs der Linie B-B in Figur 1
- Figur 6: einen Schnitt längs der Linie A-A in Figur 4
- Figur 7: ein weiteres Beispiel einer Verteilervorrichtung in Form einer Verteilerbox in Frontansicht mit einer mehrteiligen Verteilerplatte
- Figur 8: einen Schnitt längs der Linie E-E in Figur 7
- Figur 9: eine Ansicht der Verteilerbox der Figur 7 im zusammengeklappten Zustand der Verteilerbox
- Figur 10: eine Ansicht des Schnittes der Figur 8 der Verteilerbox im zusammengeklappten Zustand der Verteilerbox
- Figur 11: einen Schnitt längs der Linie F-F in Figur 7
- Figur 12: einen Schnitt längs der Linie C-C in Figur 10 und
- Figur 13: eine perspektivische Ansicht eines Rahmens, in den zwei Verteilerboxen gemäß den Figuren 7 bis 12 eingehängt sind.

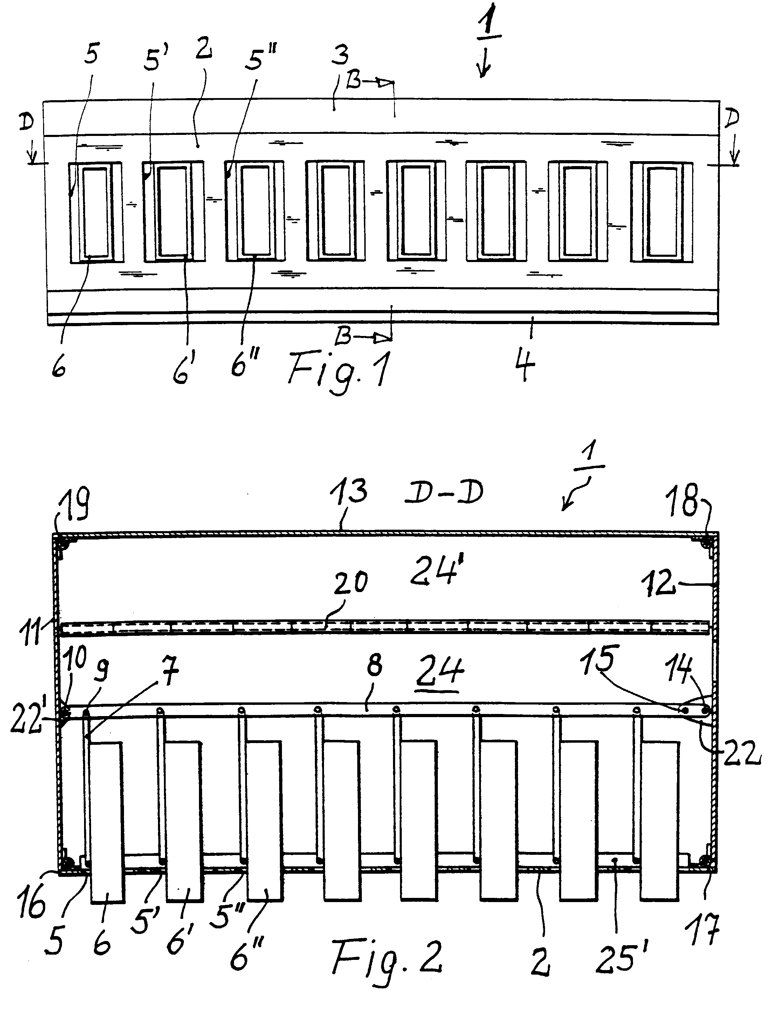

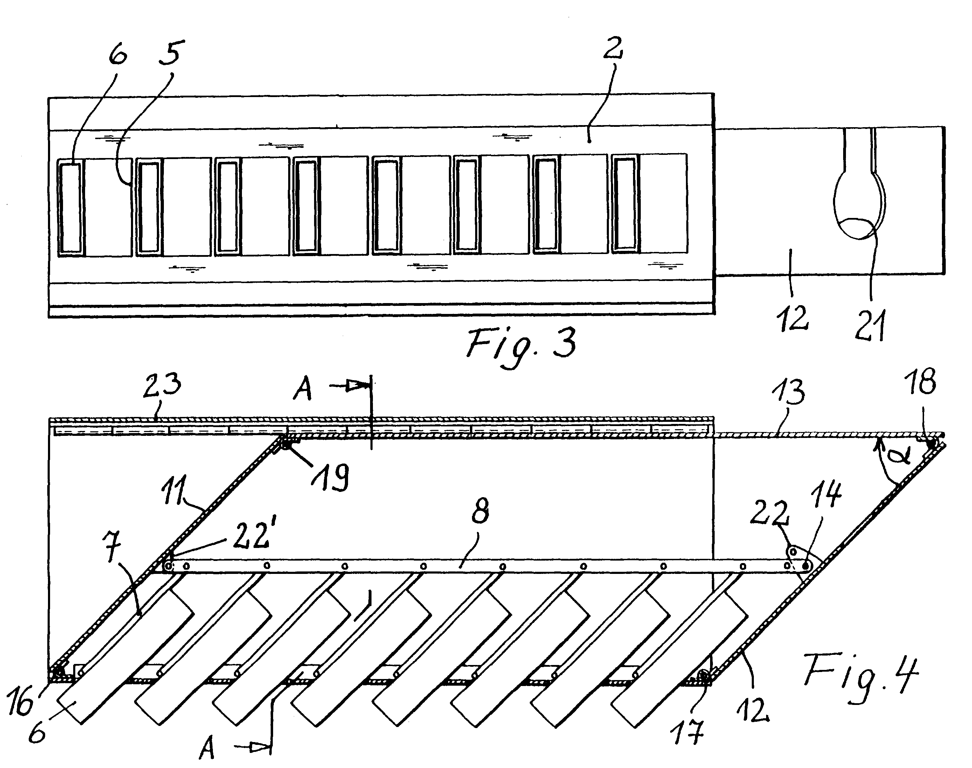

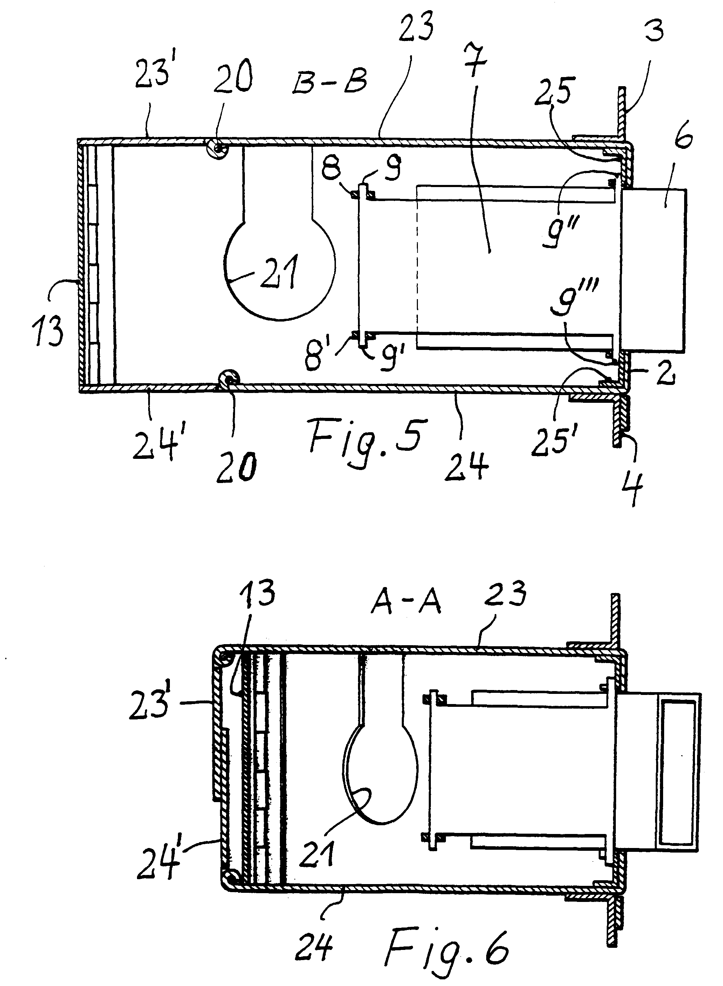

In den Figuren sind gleiche Teile mit gleichen Bezugszeichen gekennzeichnet. Gemäß den Figuren 1 bis 6 besteht ein Beispiel einer zusammenklappbaren Verteilervorrichtung in Form einer Verteilerbox 1 aus einer vorzugsweise länglich-rechtwinkligen Front- oder Verteilerplatte 2, die gemäß der europäischen Patentanmeldung EP 93 12 0487.9, angemeldet am 18.12.1993, gestaltet sein kann und dazu an der oberen und unteren Längskante je einen längs verlaufenden Winkel oder Schenkel 3, 4 trägt, wie es am besten aus Figur 5 zu ersehen ist. Die Verteilerbox 1 besitzt des weiteren eine obere und untere Deckwand 23 bzw. 24 sowie eine linke und eine rechte Seitenwand 11 bzw. 12; die Deckwände 23, 24 sowie die Seitenwände 11, 12 sind nicht starr miteinander verbunden. Die Verteilerplatte 2 besitzt eine Mehrzahl von in äquidistanten Abständen angeordneten, länglichen Aussparungen 5, 5', 5" usw, die vorzugsweise rechteckig sind, und die senkrecht zur Längsrichtung der Verteilerplatte gerichtet sind, und durch die nach außen die Enden von Kupplungen oder Stecker 6, 6', 6" usw. ragen, so daß dieselben von vorn der Verteilerplatte 2 zugänglich sind. Die Aussparungen 5, 5', 5" besitzen eine lichte Höhe, die geringfügig größer ist, als die Höhe der Kupplungen oder Stecker 6, 6', 6", so daß die Kupplungen oder Stecker mit etwas Spiel in die Höhe der Aussparungen passen; hingegen ist die Breite der Aussparungen 5, 5', 5" größer als die Breite der Kupplungen oder Stecker 6, 6', 6", wie es in Figur 1 gezeigt ist, wobei die Kupplungen oder Stecker 6, 6', 6" mittig innerhalb der Aussparungen 5, 5', 5" angeordnet sind. Beispielsweise sind die Aussparungen 5, 5', 5" zwischen 5 mm bis 16 mm horizontal breiter als die horizontale Breite der Kupplungen 6, 6', 6", was zum einen vom Faltwinkel a (Figur 4) sowie von der Dicke des Frontbleches 2 abhängt.

Gemäß den Figuren 2 und 5 ist jede der Kupplungen 6, 6', 6" vertikal an einer Halteplatte 7 befestigt, deren Gestaltung am besten aus Figur 5 zu entnehmen ist. Die Halteplatte 7 ist flächig-rechteckförmig gestaltet und besitzt in ihren Ecken vier Zapfen 9, 9', 9", 9"', die sich vertikal in Richtung der kürzeren Seitenkanten erstrecken. Zwischen den Seitenwänden 11, 12 erstrecken sich je eine obere und untere Schubstange 8, 8' (Figur 5), die drehbar um Zapfen 10, 14 gehaltert sind, die durch an den Seitenwänden befestigten Augen 22, 22' geführt sind. Auf der Innenseite des Frontbleches 2 sind oberhalb und unterhalb der Kupplungen 6, 6', 6" längsverlaufend und diesen benachbart je eine Schiene 25, 25' angeordnet, die entweder rechtwinklig oder C-förmig gestaltet sein können. Einer der Schenkel der Schiene verläuft horizontal zu den Kupplungen 6, 6', 6" über alle hinweg, wobei dieser Schenkel in äquidistanten Abständen Löcher aufweist, durch die die der Frontplatte 2 zugewandten Zapfen 9", 9"' der Halteplatten 7 drehbar geführt sind. Ebenso weisen die Schubstangen 8, 8' in äquidistanten Abständen gemäß dem Abstand zweier benachbarter Kupplungen 6, 6' Löcher auf, durch die die Zapfen 9, 9' des hinteren Endes der Halteplatten 7 drehbar geführt sind. Auf diese Weise sind die einzelnen Kupplungen 6, 6', 6" beweglich an vier Punkten aufgehängt, nämlich an den Zapfen 9, 9', 9", 9"'. Wenigstens die obere Schubstange 8 besitzt einen Arretierstift 15, der gleichzeitig durch ein Loch in der Schubstange 8 sowie in ein Loch innerhalb des Auges 22 geführt ist, das mit dem Loch in der Schubstange bei aufgerichteter Verteilerbox koinzidiert. So können die Schubstange und sämtliche Kupplungen bei aufgefalteter Verteilerbox miteinander verriegelt werden.

Die Seitenwände 11, 12 sind seitlich an der Verteilerplatte 2 mittels Scharnieren 16, 17 drehbar gehaltert; ebenso ist die Rückwand 13 mittels endseitigen Scharnieren 18, 19 drehbar an den hinteren Schmalseiten der Seitenwände 11, 12 gehaltert. Die obere wie die untere Deckwand 23 bzw. 24 besitzen je einen rückwärtigen Teil 23', 24', der an dem vorderen Teil 23 bzw. 24 mittels eines durchgehenden Scharniers 20, 20' befestigt ist, so daß dieser jeweilige rückwärtige Teil 23', 24' um 90 Grad nach oben bzw. unten klappbar ist.

Zum Zusammenklappen der Verteilerbox 1 bzw. zum Verkleinern der Tiefe der Verteilerbox 1 wird der Arretierstift 15 aus der Schubstange 8 und aus dem Auge 22 gezogen. Nunmehr kann die gesamte Verteilerbox gemäß Figur 4 nach rechts um einen Winkel α geklappt werden, wobei die Kupplungen 6, 6', 6" innerhalb der Aussparung 5, 5', 5" schräg stehen; die Mittelpunkte der Drehbewegung einer jeden Kupplung 6, 6', 6" werden durch die Zapfen 9", 9"' der Halteplatte 7 gebildet, die drehbar in den feststehenden Schienen 25, 25' gehaltert sind.

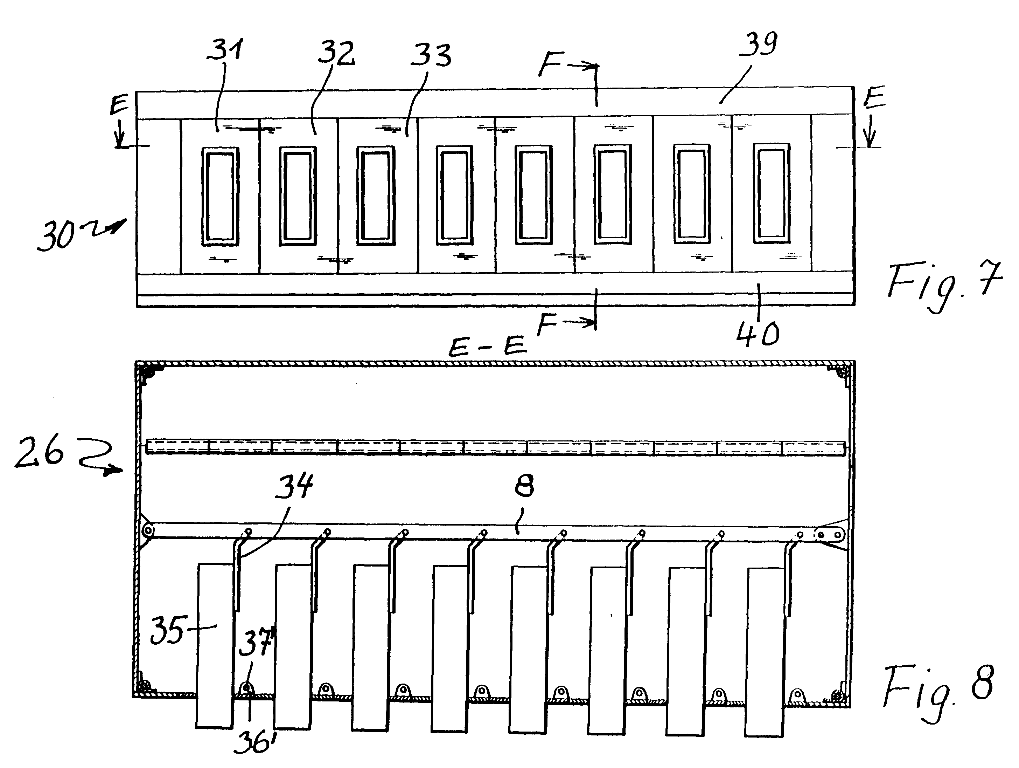

Bei seitlicher Bewegung der Seitenwände 11, 12 nach rechts werden die Schubstangen 8, 8' mitgenommen, wodurch die Zapfen 9, 9' innerhalb der Löcher der Schubstangen 8, 8' unter Mitnahme der Halteplatten 7 bzw. der daran befestigten Kupplungen 6, 6', 6" mitsamt den daran befestigten Lichtwellenleitern mitschwenken. In der Endlage wird eine Stellung der Kupplungen 6, 6', 6" gemäß der Figur 4 erreicht, wodurch die rückwärtige Seitenwand 13 der Verteilerbox 1 auf die Frontplatte 2 zuwandert, bis über die Scharniere 20, 20' der Deckwandungen 23, 24 hinein. Es werden der äußere Abschnitt 23' der oberen Deckwand 23 sowie der äußere Abschnitt 24' der unteren Deckwand 24 gemäß Figur 6 aufeinander zugeklappt, bis die äußeren Abschnitte 23' bzw. 24' rechtwinklig zu den Wandungen 23 bzw. 24 stehen. Auf diese Weise hat die Verteilerbox 1 nur noch eine Tiefe von höchstens zwei Drittel gemäß Figur 4 gegenüber der ursprünglichen Tiefe, wie sie der Figur 2 zu entnehmen ist. Alle (nicht gezeigten) Lichtwellenleiter sind durch die Aussparung 21 nach außen geführt.

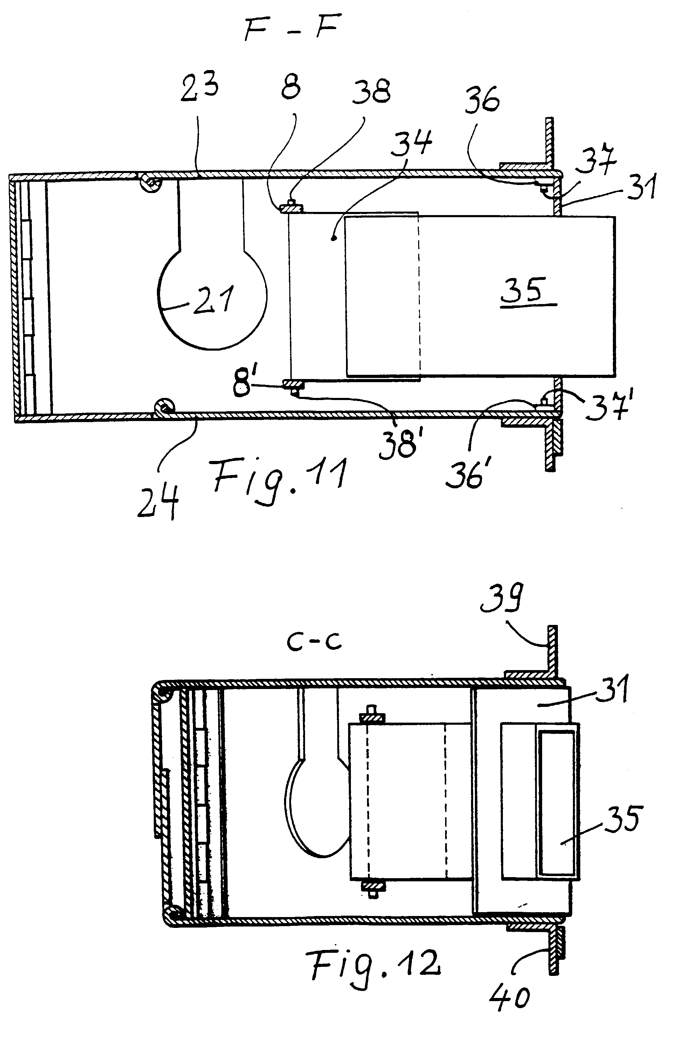

Aus den Figuren 4 und 10 ist des weiteren zu entnehmen, daß die Lichtwellenleiter-Stecksysteme 6, 6', 6", 35 in Richtung der Steckachse um einen vorgegebenen Winkel *α,* β kleiner 90 Grad relativ zur Verteilerplatte 2, 31, 32, 33 in fest vorgegebener Stellung, aber geneigt angeordnet sein können unter Verringerung der Tiefe gemessen von der Verteilerplatte (2;31,32,33) zum hinteren Ende des Lichtwellenleiter-Stecksystems 6, 6', 6", 35. Die Richtung der Steckachse und die Normale der Verteilerplatte bilden somit einen festen Winkel *α,* β kleiner 90 Grad. Die feste Anordnung kann gewählt werden, wenn sichergestellt ist, daß der sich dadurch bleibend einstellende Biegeradius der abgehenden Kabel immer größer als ein kritischer Biegeradius bleibt. In diesem Fall kann die zugehörige Verteilerbox auch zur Verteilerplatte rechtwinklig und starr angeordnete Seitenwände aufweisen.

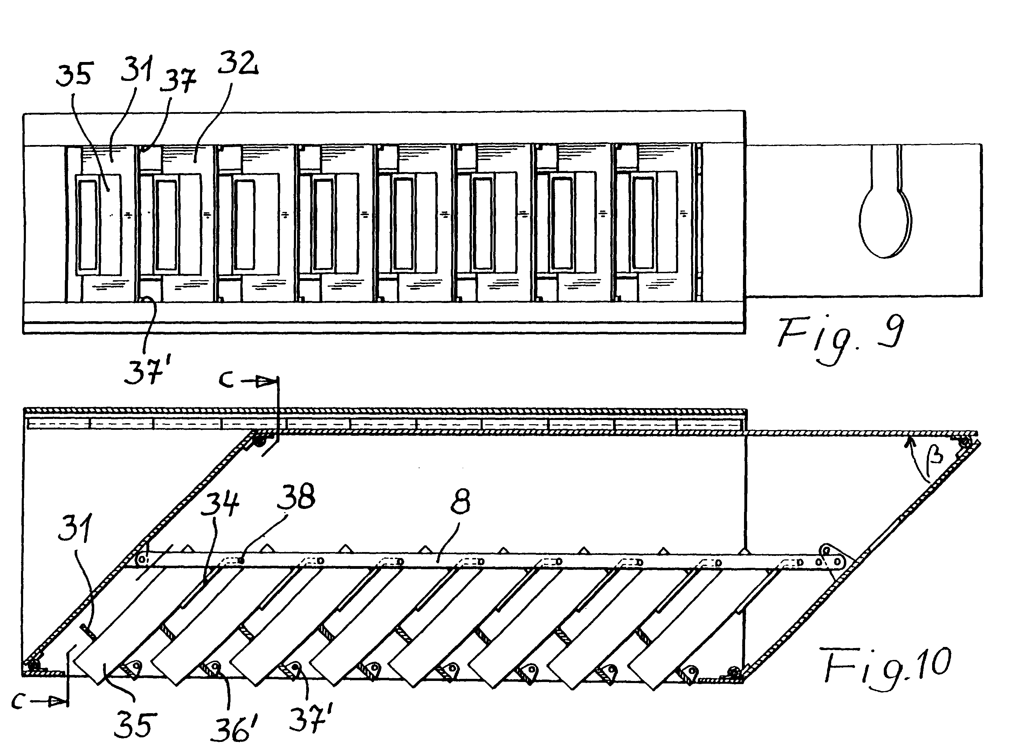

Bei einer Verteilerbox 26 der Figuren 7 bis 13 ist die Verteilerplatte 30 in eine Mehrzahl von einzelnen Abschnitten 31, 32, 33 unterteilt, die je eine Aussparung besitzen, in der eine Kupplung 35 fest angeordnet ist. An der Kupplung 35 ist gleichermaßen eine Halteplatte 34 befestigt, die ähnlich der Halteplatte 7 des vorhergehenden Beispiels ist und deren Gestaltung am besten aus der Figur 11 zu entnehmen ist. Die Halteplatte 34 ist quadratisch oder rechteckig und besitzt an ihrem der Verteilerplatte 30 abgewandten Ende in jeder Ecke einen vertikal sich erstreckenden Zapfen 38, 38'. Gleichermaßen wie im vorhergehenden Beispiel sind in der Verteilerbox 26 eine obere und eine untere Schubstange 8, 8' angeordnet, die Löcher aufweisen, durch die die Zapfen 38, 38' drehbar hindurchragen.

Jeder Abschnitt 31, 32, 33 der Verteilerplatte 30 besitzt auf der Innenseite der Verteilerbox 26 oben und unten ein Auge 36, 36', welches sich horizontal nach innen erstreckt, was aus den Figuren 8, 10 und 11 zu entnehmen ist. In der oberen und unteren Deckwandung 23 bzw. 24 sind in äquidistanten Abständen entsprechend dem Abstand zweier benachbarter Kupplungen 35 feststehende Zapfen 37, 37' angeordnet, die durch die an den Abschnitten 31, 32, 33 befestigten Augen 36, 36' hindurchragen. Der übrige Aufbau der Verteilerbox 26 entspricht derjenigen des vorbeschriebenen Beispiels.

Beim Zusammenklappen der Verteilerbox 26 um den Winkel β, gemäß Figur 10 nach rechts, werden die beweglich zwischen den Seitenwandungen 11, 12 gehalterten Schubstangen 8, 8' von den Seitenwandungen 11, 12 mitgenommen, wobei die Zapfen 38, 38' einer jeden Halteplatte 34 sich in den Löchern der Schubstangen 8, 8' drehen unter Mitnahme sämtlicher Kupplungen 5 und weiterhin unter Mitnahme jeweils der Abschnitte 31, 32, 33 der Verteilerplatte 30; diese Abschnitte 31, 32, 33 drehen sich um die Zapfen 37, 37' als Mittelpunkt der Kreisbewegung, die die Kupplungen 5 ausführen. Auf diese Weise wird durch die Parallelogrammverschiebung der Seitenwände um den Winkel β schließlich die Lage der Verteilerbox 26 in Figur 10 erreicht, aus der ersichtlich ist, daß die Tiefe der Verteilerbox 26 höchstens drei Viertel bis zwei Drittel der Verteilerbox 26 im aufgefalteten Zustand gemäß Figur 8 beträgt. Nunmehr können wieder die rückwärtigen Teile der oberen und unteren Deckwandung nach innen umgeschlagen werden, wie es am besten der Figur 12 entnommen werden kann.

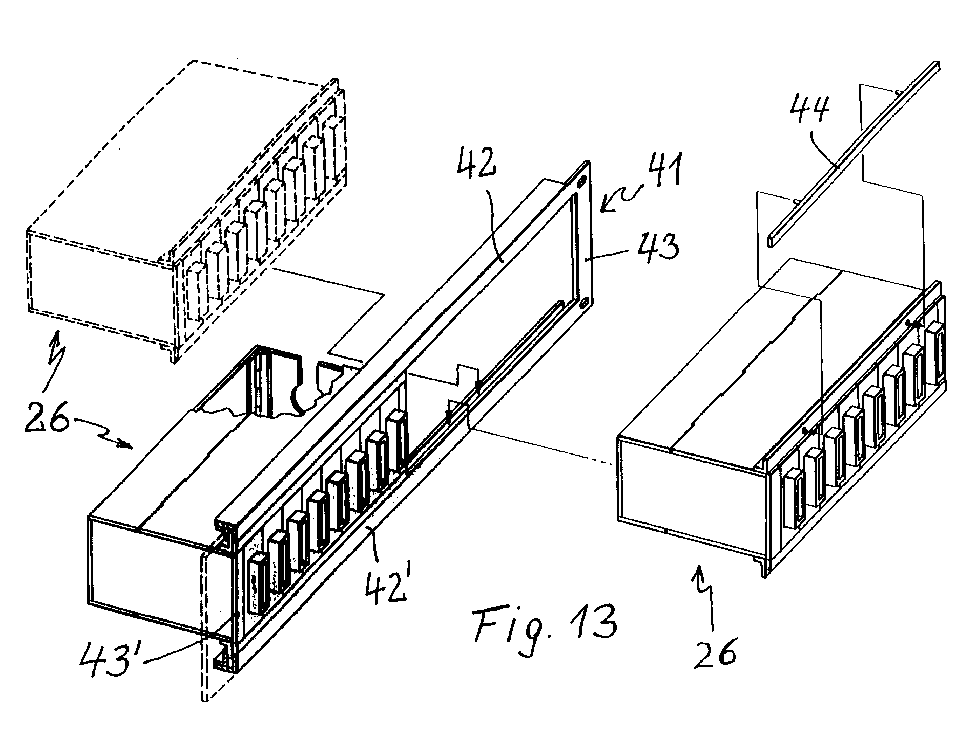

Figur 13 zeigt eine perspektivische Darstellung einer Rahmenplatte 41, die der Rahmenplatte gemäß der europäischen Patentanmeldung EP 93 12 0487.9 vom 18.12.1993 entspricht und die aus einer oberen und unteren C-Schiene 42, 42' besteht, die beide durch Verbindungsstege 43, 43' miteinander zu einem Rahmen 41 verbunden sind; dieser Rahmen 41 dient beispielsweise zur Befestigung an senkrechten Schienen eines Verteilerschrankes, in welchem eine Mehrzahl derartiger Rahmenplatten 41 mit Verteilerboxen 1, 26 angeordnet sind, wie es in der europäischen Patentanmeldung EP 93 12 0487.9 durch Figur 1 gezeigt ist. In diese Rahmenplatten 41 können die Verteilerboxen 1, 26 nach dem Durchziehen der Verteilerboxen 1, 26 einschließlich der Lichtwellenleiter-Stecksysteme durch ein Rohr und nach dem Wiederaufrichten der Boxen eingehängt werden, wie es durch die abgewinkelten Striche mit Pfeilspitzen angedeutet ist. Durch die gestrichelt gezeichnete Verteilerbox 26 soll angedeutet sein, daß die Boxen 26 sowohl von vorne als auch von hinten in die Rahmenplatte 41 eingehängt werden können. Mittels einer Verriegelungsleiste 44 werden die in die Rahmenplatte 41 eingesetzten Verteilerboxen 1, 26 gegen ein Herausnehmen verriegelt, wie es in der europäischen Patentanmeldung EP 93 12 0487.9 beschrieben ist, auf die Bezug genommen wird.

Gewerbliche Anwendbarkeit und Nützlichkeit:
Die Erfindung ist insbesondere zur Verkabelung von Verteilerschränken, beispielsweise für Rechenzentren, geeignet, weil sie den Vorteil besitzt, daß derartige Verteilervorrichtungen, wie Verteilerplatten und Verteilerboxen, mitsamt den daran befestigten vollständig konfektionierten Stecksystemen, wie Kupplungen und/oder Steckern oder sonstigen Verbindungsgliedern, vorzugsweise an beiden Enden der Lichtwellenleiter, durch enge Rohre oder Mauer- und Deckendurchbrüche gezogen werden können, deren Durchmesser erheblich geringer sein können, als die lotrechte Tiefe der Verteilerplatte oder der Verteilerbox mit daran befestigten Stecksystemen beträgt, weil die Verteilerplatten oder die Verteilerboxen um wenigstens ein Viertel bis ein Drittel, oder noch mehr, ihrer Tiefe verringert bzw. "zusammengefaltet" und in diesem Zustand der "Zusammenfaltung" durch das Rohr oder den Mauer- und Deckendurchbruch gezogen werden können; anschließend werden die Stecksysteme auf einer bloßen Verteilerplatte wieder senkrecht aufgerichtet oder die Verteilerbox wird wieder aufgefaltet. Beim Einsatz von vorkonfektionierten Verteilerboxen können die Stecksysteme auf einer Verteilerplatte in schräger Anordnung fest montiert geneigt bzw. schräg angeordnet sein und in diesem Zustand verbleiben, auch wenn die Verteilerbox wieder senkrecht aufgerichtet wird. Bei schwenkbarer Ausgestaltung der Stecksysteme können diese auf der Verteilerplatte in jeder Winkelstellung des Schwenkwinkels arretiert werden. So können Rohre mit geringerem Durchmesser verwendet oder Durchbrüche mit geringeren lichten Weiten geschlagen werden, als es der Tiefe der Verteilerplatte mit senkrecht zu ihr aufgerichteten Stecksystemen oder der Verteilerbox im aufgerichteten und aufgeklappten Zustand entsprechen würde.

### Liste der Bezugszeichen:

- 1: Verteilerbox
- 2: Front oder Verteilerblech
- 3, 4: Längswinkel oder -schenkel
- 5, 5', 5": Aussparungen
- 6, 6', 6": Kupplungen oder Stecker
- 7: Halteplatte
- 8, 8': Schubstangen
- 9, 9', 9", 9"': Zapfen
- 10, 14: Drehgelenke
- 11, 12: Seitenwände
- 13: Rückwand
- 15: Arretierstift
- 16, 17, 18, 19, 20, 20': Scharniere (Klavierband)
- 21: Aussparung
- 22, 22': Augen
- 23, 23': obere Deckwände
- 24, 24': untere Deckwände
- 25, 25': C-Schenkelschienen
- 26: Verteilerbox
- 30: Verteilerplatte
- 31, 32, 33: Abschnitte des Front- oder Verteilerblechs
- 34: Halteplatte
- 35: Kupplung
- 36, 36': Auge
- 37, 37': Zapfen
- 38, 38': Zapfen
- 39,40: Längsschenkel
- 42, 42': C-Schienen
- 43, 43': Verbindungsstege
- 44: Verriegelungsleiste

## Patentansprüche

1. Verteilervorrichtung für Lichtwellenleiterkabel, bestehend aus einer frontseitigen Verteilerplatte (2;31,32,33) und einer Mehrzahl von optischen Lichtwellenleiter-Stecksystemen, wie Kupplungen (6,6',6") und/oder Stecker mit Lichtwellenleiterkabeln, wobei die Verteilerplatte (2;31,32,33) die Form eines Rechtecks mit einer Mehrzahl von Aussparungen (5,5',5") hat, welche in Längsrichtung der Verteilerplatte nebeneinander angeordnet sind und in denen die Lichtwellenleiter-Stecksysteme (6,6', 6";35) angeordnet sind, welche die Verteilerplatte (2;31,32,33) in den Aussparungen (5,5',5") durchragen und von der Vorderseite der Verteilerplatte (2;31,32,33) zugänglich sind,
dadurch gekennzeichnet,
daß jedes einzelne Lichtwellenleiter-Stecksystem (6,6',6";35) in der Verteilerplatte (2;31,32,33) schwenkbar um eine Achse senkrecht zur Längsrichtung und zur Flächennormalen der Verteilerplatte angeordnet ist, wobei die Lichtwellenleiter-Stecksysteme bei Auslenkung aus der Richtung der Flächennormalen mit der Verteilerplatte einen vorgebbaren Schwenkwinkel (α,β) einschließen, der zwischen 0 und 90 Grad liegt und für alle Lichtwellenleiter-Stecksysteme gleich ist, wodurch die in Richtung der Flächennormalen gemessene Tiefe der Verteilervorrichtung veränderbar ist, so daß die Tiefe im Fall einer Auslenkung der Stecksysteme gegenüber der Tiefe im Fall der Anordnung der Stecksysteme senkrecht zur Verteilerplatte verringert ist.

2. Verteilervorrichtung nach Anspruch 1,
dadurch gekennzeichnet,
daß sie an die Verteilerplatte (2;31,32,33) in Längsrichtung seitlich angreifende Seitenwände (11,12) aufweist, die, vorzugsweise mittels Scharnieren (16, 17), relativ zur Verteilerplatte beweglich schwenkbar angeordnet sind und stets den gleichen Schwenkwinkel (α,β) wie die Lichtwellenleiter-Stecksysteme einnehmen, wodurch die in Richtung der Flächennormalen gemessene Tiefe der Verteilervorrichtung veränderbar ist, so daß die Tiefe im Fall einer Auslenkung der Stecksysteme gegenüber der Tiefe im Fall der Anordnung der Stecksysteme und der Seitenwände senkrecht zur Verteilerplatte verringert ist.

3. Verteilervorrichtung nach Anspruch 1 oder 2,
dadurch gekennzeichnet,
daß die Lichtwellenleiter-Stecksysteme (6,6',6";35) an einer relativ zur Verteilerplatte (2;31,32,33) schwenkbaren Halterung befestigt sind, wobei die Schrägstellung der Lichtwellenleiter-Stecksysteme (6,6',6";35) relativ zur Verteilerplatte, d.h. die Winkelposition des Schwenkwinkels (α,β), mittels einer Verriegelung (15, 22) der schwenkbaren Halterung arretierbar ist.

4. Verteilervorrichtung nach Anspruch 3,
dadurch gekennzeichnet,
daß das einzelne Lichtwellenleiter-Stecksystem an jeweils einer Halteplatte (34) befestigt ist, wobei die Halteplatten mittels Zapfen (9, 9', 9", 9"', 37, 37', 38, 38') schwenkbar mit einer Schubstange (8, 8') verbunden sind, welche relativ zur Verteilerplatte (2;31,32,33) parallelverschiebbar ist.

5. Verteilervorrichtung nach einem der Ansprüche 1 bis 4,
dadurch gekennzeichnet,
daß die Aussparungen (5,5',5") innerhalb der Verteilerplatte (2;31,32,33) äquidistant angeordnet sind.

6. Verteilervorrichtung nach einem der Ansprüche 2 oder 3 bis 5, falls sie von Anspruch 2 abhängig sind, dadurch gekennzeichnet, daß
a) jedes Lichtwellenleiter-Stecksystem (6,6',6") an je einer Halteplatte (7) befestigt ist, die an wenigstens zwei sich diagonal gegenüberliegenden Ecken, vorzugsweise an allen vier Ecken, mittels Zapfen (9,9',9",9"') schwenkbar gehaltert ist,
b) die vorderen, der Verteilerplatte (2) benachbarten Zapfen (9",9"') in Löcher einer oberen und einer unteren, an der Verteilerplatte (2) befestigten Schiene (25,25') eingreifen und die hinteren, der Verteilerplatte (2) abgewandten Zapfen (9, 9') drehbar in Löchern von mindestens einer Schubstange (8,8') gehaltert sind, die ihrerseits zwischen den Seitenwänden (11,12) der Verteilerbox (1) drehbar gehaltert sind, wobei die vorderen Zapfen (9",9"') die Mittelpunkte der kreisförmigen Schwenkbewegung sind,
c) so daß bei einer Parallelogrammverschiebung der Seitenwände (11,12) dieselben seitlich um die Schmalkanten der Verteilerplatte (2) unter Mitnahme der Schubstangen (8,8') sowie sämtlicher Lichtwellenleiter-Stecksysteme (6,6',6") schwenkbar sind.

7. Verteilervorrichtung nach einem der Ansprüche 2 oder 3 bis 5, falls sie von Anspruch 2 abhängig sind,
dadurch gekennzeichnet, daß
a) die Verteilerplatte (30) in eine Mehrzahl von senkrecht zueinander angeordnete Abschnitte (31,32,33) unterteilt ist, wobei jeder Abschnitt (31,32,33) eine Aussparung aufweist, in der ein Lichtwellenleiter-Stecksystem (35) fest angeordnet ist,
b) jedes Lichtwellenleiter-Stecksystem (35) je eine Halteplatte (34) trägt, die an ihrem hinteren, von der Verteilerplatte (30) entfernt liegenden Ende schwenkbar an wenigstens einer Schubstange (8,8') gelenkig angreift,
c) jeder Abschnitt (31,32,33) mittels mindestens eines Scharniers (36,36', 37,37') um mindestens einen festen Drehpunkt (37,37') als Mittelpunkt der kreisförmigen Schwenkbewegung drehbar befestigt ist, die im Bereich der oberen und/unteren Längskante der Verteilerplatte (30) gehaltert sind,
d) so daß bei einer Parallelogrammverschiebung der Seitenwände (11,12) diese seitlich um die Schmalkanten der Verteilerplatte (30) unter Mitnahme der Schubstangen (8,8') sowie sämtlicher Lichtwellenleiter-Stecksysteme (35) und der Abschnitte (31,32,33) schwenkbar sind.

8. Verteilervorrichtung nach einem der Ansprüche 2, 3 bis 5, falls sie von Anspruch 2 abhängig sind, 6 oder 7,
dadurch gekennzeichnet,
daß sie eine obere und untere Deckwandung (23,24) aufweist und somit als Verteilerbox (1,26) ausgebildet ist, wobei die Seitenwände gegenüber den Deckwandungen (23,24) frei beweglich sind und die Deckenwandungen (23,24) jeweils in einen vorderen und einen hinteren, mittels eines Scharniers miteinander verbunden Abschnitt (23,23';24,24') unterteilt sind, so daß nach der Faltung der Seitenwände (11,12) und der Lichtwellenleiter-Stecksysteme (6,6',6",35) jeweils der äußere Abschnitt (23',24') der Deckwandungen um 90 Grad zum vorderen Abschnitt (23, 24) nach unten bzw. nach oben klappbar, wodurch die in Richtung der Flächennormalen der Verteilerplatte gemessene Tiefe des Verteilervorrichtungs veränderbar ist, so daß die Tiefe im Fall einer Auslenkung der Stecksysteme gegenüber der Tiefe im Fall der Anordnung der Stecksysteme und der Seitenwände senkrecht zur Verteilerplatte und ausgeklappter Deckenwandungen verringert ist.

9. Verteilervorrichtung nach einem der Ansprüche 2, 3 bis 5, falls sie von Anspruch 2 abhängig sind, 6 bis 8,
dadurch gekennzeichnet,
daß eine der Seitenwände (11,12) eine Aussparung (21) zur Durchführung der von außen kommenden Lichtwellenleiterkabel aufweist.

10. Verteilervorrichtung nach einem der Ansprüche 2 bis 9,
dadurch gekennzeichnet,
daß an den der Verteilerplatte abgewandten Enden der Seitenwände (11,12) eine Rückwand (13) angeordnet ist, welche die Seitenwände verbindet, mittels Scharnieren (18,19) relativ zu diesen klappbar ist, so daß sie der Bewegung der Seitenwände folgen kann, und gegenüber den Deckwandungen (23,24) frei beweglich ist.

## Claims

1. Distribution means for optical waveguide cable, consisting of a distribution plate (2; 31, 32, 33) on the front and a plurality of optical waveguide plug systems such as couplings (6, 6', 6") and/or plugs with optical waveguide cables, whereby the distribution plate (2; 31, 32, 33) has the shape of a rectangle with a plurality of recesses (5, 5', 5") which are arranged adjacent to each other in the longitudinal direction of the distribution plate and in which the waveguide plug systems (6, 6', 6"; 35) are arranged, which protrude through the distribution plate (2; 31, 32, 33) into the recesses (5, 5', 5") and which are accessible from the front of the distribution plate (2; 31, 32, 33),
characterized in that
every single waveguide plug system (6, 6', 6"; 35) is arranged in the distribution plate (2; 31, 32, 33) so as to pivot around an axis that is vertical to the longitudinal direction and to the surface normal line of the distribution plate, whereby, when the waveguide plug systems make an excursion from the direction of the surface normal line, they create a predefinable pivot angle (α, β) that is between 0 and 90 degrees with respect to the distribution plate and that is the same for all of the waveguide plug systems, as a result of which the depth of the distribution means, measured in the direction of the surface normal line, is variable so that the depth is reduced in case of an excursion of the plug systems as compared to the depth in case of an arrangement of the plug systems that is vertical to the distribution plate.

2. Distribution means according to Claim 1,
characterized in that
it has side walls (11, 12) which act laterally upon the distribution plate (2; 31, 32, 33) in the longitudinal direction which, preferably by means of hinges (16, 17), are arranged movably so that they can pivot relative to the distribution plate, always creating the same pivot angle (α, β) as the waveguide plug systems, as a result of which the depth of the distribution means, measured in the direction of the surface normal line, is variable so that the depth is reduced in case of an excursion of the plug systems as compared to the depth in case of an arrangement of the plug systems that is vertical to the distribution plate.

3. Distribution means according to Claim 1 or 2,
characterized in that
waveguide plug systems (6, 6', 6"; 35) are attached to a holder that can pivot relative to the distribution plate (2; 31, 32, 33), whereby the oblique position of the waveguide plug systems (6, 6', 6"; 35) relative to the distribution plate, i.e. the angle position of the pivot angle (α, β), can be locked by means of a catch (15, 22) on the pivoting holder.

4. Distribution means according to Claim 3,
characterized in that
each individual waveguide plug system is attached to a holding plate (34), whereby the holding plates are connected - so as to pivot by means of pins (9, 9', 9", 9"', 37, 37', 38, 38') - to a slide rod (8, 8') which can be shifted parallel to the distribution plate (2; 31, 32, 33).

5. Distribution means according to one of Claims 1 through 4,
characterized in that
the recesses (5, 5', 5") are arranged equidistant from each other within the distribution plate (2; 31, 32, 33).

6. Distribution means according to one of Claims 2 or 3 through 5, if they are dependent on Claim 2, characterized in that
a) each waveguide plug system (6, 6', 6") is attached to a holding plate (7) which, on at least two diagonally opposed corners, preferably on all four corners, is affixed by means of pins (9, 9', 9", 9"') so as to pivot,
b) the front pins (9", 9"'), which are adjacent to the distribution plate (2), engage in holes of an upper and a lower rail (25, 25') attached to the distribution plate (2) and the rear pins (9, 9'), which face away from the distribution plate (2), are held - so as to rotate in holes - by at least one slide rod (8, 8') which, in turn, is affixed so as to rotate between the side walls (11, 12) of the distribution box (1), whereby the front pins (9", 9"') are the central points of the circular pivoting motion,
c) so that, in case of a parallelogram-like shifting of the side walls (11, 12), said walls can pivot laterally around the narrow edges of the distribution plate (2), carrying along the slide rods (8, 8'), as well as all of the waveguide plug systems (6, 6', 6").

7. Distribution means according to one of Claims 2 or 3 through 5, if they are dependent on Claim 2, characterized in that
a) the distribution plate (30) is divided into a plurality of sections (31, 32, 33) arranged vertically with respect to each other, whereby each section (31, 32, 33) has a recess in which a waveguide plug system (35) is permanently arranged,
b) each waveguide plug system (35) has a holding plate (34) which, at its rear end located away from the distribution plate (30), engages in an articulated manner with at least one slide rod (8, 8') so as to pivot,
c) each section (31, 32, 33) is attached so as to rotate by means of at least one hinge (36, 36', 37, 37') around at least one fixed pivot (37, 37') as the central point of the circular pivoting motion and said sections are held in the area of the upper and lower lengthwise edge of the distribution plate (30),
d) so that, in case of a parallelogram-like shifting of the side walls (11, 12), said walls can pivot laterally around the narrow edges of the distribution plate (30), carrying along the slide rods (8, 8'), as well as all of the waveguide plug systems (35) and the sections (31, 32, 33).

8. Distribution means according to one of Claims 2, 3 through 5, if they are dependent on Claim 2, 6 or 7, characterized in that
it has an upper and lower cover wall (23, 24) and is thus configured as a distribution box (1, 26), whereby the side walls are freely movable with respect to the cover walls (23, 24) and the cover walls (23, 24) are each divided into a front and a back section (23, 23'; 24, 24') connected to each other by means of a hinge, so that, after the folding of the side walls (11, 12) of and the waveguide plug systems (6, 6', 6"; 35), each outer section (23', 24') of the cover walls can be tilted up or down by 90 degrees with respect to the front section (23, 24), as a result of which the depth of the distribution means, measured in the direction of the surface normal line, is variable so that the depth is reduced in case of an excursion of the plug systems as compared to the depth in case of an arrangement of the plug systems and the side walls that is vertical to the distribution plate and to the tilted-open cover walls.

9. Distribution means according to one of Claims 2, 3 through 5, if they are dependent on Claim 2, 6 through 8, characterized in that
one of the side walls (11, 12) has a recess (21) for passing through the waveguide cable that comes from the outside.

10. Distribution means according to one of Claims 2 through 9,
characterized in that,
on the ends of the side walls (11, 12) facing away from the distribution plate, there is a rear wall (13) which connects the side walls, which can be tilted relative to said walls by means of hinges (18, 19), so that it can follow the motion of the side walls, and it is freely movable with respect to the cover walls (23, 24).

## Revendications

1. Dispositif de distribution pour câbles à fibres optiques consistant en une plaque de distribution frontale (2;31,32,33) et une multitude de systèmes d'enfichage pour câbles à fibres optiques tels que connecteurs (6,6',6") et/ou fiches avec câbles à fibres optiques, la plaque de distribution (2;31,32,33) ayant la forme d'un rectangle et comportant un grand nombre de réserves (5,5',5") juxtaposées dans le sens longitudinal de la plaque de distribution et dans lesquels sont agencés les systèmes d'enfichage pour câbles à fibres optiques (6,6', 6";35), systèmes d'enfichage passant à travers la plaque de distribution (2;31,32,33) dans les réserves (5,5',5") et étant accessibles depuis le côté avant de la plaque de distribution (2;31,32,33),
caractérisé en ce que
chaque système d'enfichage pour câbles à fibres optiques (6,6', 6";35) dans la plaque de distribution (2;31,32,33) est disposé de façon à pivoter autour d'un axe vertical par rapport au sens longitudinal et par rapport à la normale de la plaque de distribution, les systèmes d'enfichage pour câbles à fibres optiques, lorsqu'ils sont déviés du sens de la normale formant avec la plaque de distribution un angle d'inclinaison prédéterminable (α,β) compris entre 0 et 90 degrés, égal pour tous les systèmes d'enfichage pour câbles à fibres optiques, ce par quoi la profondeur du dispositif de distribution mesurée dans le sens de la normale est variable, de sorte que, quand les systèmes d'enfichage sont inclinés, la profondeur est réduite par rapport à la profondeur dans le cas où les systèmes d'enfichage sont disposés verticalement à la plaque de distribution.

2. Dispositif de distribution selon la revendication 1,
caractérisé en ce qu'
il présente des parois latérales (11,12) assemblées sur les côtés de la plaque de distribution (2;31,32,33) dans le sens longitudinal, de préférence au moyen de charnières (16,17) et qui sont mobiles par rapport à la plaque de distribution par un mouvement de pivotement, et prennent toujours le même angle d'inclinaison (α,β) que les systèmes d'enfichage de câbles à fibres optiques, ce par quoi la profondeur du dispositif de distribution mesurée dans le sens de la normale est variable, de sorte que, quand les systèmes d'enfichage sont inclinés, la profondeur est réduite par rapport à la profondeur dans le cas où les systèmes d'enfichage sont disposés verticalement à la plaque de distribution.

3. Dispositif de distribution selon la revendication 1 ou 2
caractérisé en ce que
les systèmes d'enfichage pour câbles à fibres optiques (6,6',6";35) sont fixés à un support pivotable par rapport à la plaque de distribution (2;31,32,33), la position inclinée des systèmes d'enfichage de câbles à fibres optiques (6,6',6";35), à savoir la position angulaire de l'angle de pivotement (α,β) peut être arrêtée par un verrouillage (15,22) du support pivotable.

4. Dispositif de distribution selon la revendication 3,
caractérisé en ce que
chacun des systèmes d'enfichage pour câbles à fibres optiques est fixé à une plaque-support (34), ces plaques-support pouvant pivoter et étant reliées au moyen de pivots (9,9',9",9"',37,37',38,38'), à une barre de course rectiligne (8,8') qui se déplace parallèlement à la plaque de distribution (2;31,32,33).

5. Dispositif de distribution selon l'une des revendications 1 à 4,
caractérisé en ce que
les réserves (5,5',5") à l'intérieur de la plaque de distribution (2;31,32,33) sont équidistantes.

6. Dispositif de distribution selon l'une des revendications 2 ou 3 à 5, au cas où elles dépendent de la revendication 2,
caractérisé en ce que
a) chaque système d'enfichage pour câble à fibres optiques (6,6',6") est fixé à une plaque-support (7) maintenue au moyen de pivots (9,9',9",9"') de façon à pouvoir pivoter en au moins deux coins diagonalement opposés, de préférence en tous les quatre coins,
b) les pivots avant (9",9"') les plus proches de la plaque de distribution (2) s'embrochent dans les perçages d'un rail supérieur et d'un rail inférieur (25,25') fixés sur la plaque de distribution (2), et les pivots arrière (9,9') opposés à la plaque de distribution (2) sont maintenus et peuvent pivoter dans les perçages de au moins une barre à course rectiligne (8,8') maintenue(s) quant à elle(s) de façon à pouvoir pivoter entre les parois latérales (11,12) du coffret de distribution, les pivots avant (9",9"') étant les points centraux d'un mouvement de pivotement circulaire,
c) si bien qu'en cas de déplacement des parois latérales (11,12) conformant un parallélogramme, lesdites parois pivotent par les petits côtés de la plaque de distribution (2), entraînant dans leur mouvement les barres à course rectiligne (8,8'), ainsi que tous les systèmes d'enfichage pour câbles à fibres optiques (6,6',6").

7. Dispositif de distribution selon l'une des revendications 2 ou 3 à 5, au cas où elles dépendent de la revendication 2,
caractérisé en ce que,
a) la plaque de distribution (30) est subdivisée en un grand nombre de sections (31,32,33) juxtaposées à la verticale, chacune de ces sections (31,32, 33) présentant une réserve dans laquelle est disposé de façon fixe un système d'enfichage de câble à fibres optiques (35),
b) chaque système d'enfichage pour câbles à fibres optiques (35) porte une plaque-support (34) qui en son extrémité arrière opposée à la plaque de distribution (30) peut pivoter et s'articule dans au moins une barre à course rectiligne (8,8'),
c) chaque section (31,32,33) est fixée de façon à pouvoir pivoter au moyen d'au moins une charnière (36,36',37,37') autour d'au moins un point de rotation fixe (37,37') qui est le point central du mouvement de pivotement circulaire, lesdites charnières étant fixées dans la zone du bord longitudinal du haut et/ou du bas de la plaque de distribution (30),
d) si bien que en cas de déplacement des parois latérales (11,12) donnant lieu à un parallélogramme, lesdites parois pivotent par les petits côtés de la plaque de distribution (30), entraînant les barres à course rectiligne (8,8'), ainsi que tous les systèmes d'enfichage pour câbles à fibres optiques (35) et des sections (31,32,33).

8. Dispositif de distribution selon l'une des revendications 2, 3 à 5, au cas où elles dépendent de la revendication 2, 6 ou 7,
caractérisé en ce qu'
il présente en haut et en bas une paroi extérieure (23,24) et est ainsi conformé en un coffret de distribution (1,26), les parois latérales étant mobiles par rapport aux parois extérieures (23,24) et les parois latérales étant divisées en une section avant et une section arrière (23,23';24,24') reliées l'une à l'autre par une charnière, de sorte que après le repliement des parois latérales (11,12) et des systèmes d'enfichage pour câbles à fibres optiques (6,6',6",35), chacune des parties externes (23',24') des parois extérieures soit rabattue à 90 degrés par rapport à la partie avant (23,24) soit vers le bas, soit vers le haut, ce par quoi la profondeur du dispositif de distribution mesurée dans le sens de la normale de la plaque de distribution est variable, de sorte que, quand les systèmes d'enfichage sont inclinés, la profondeur est réduite par rapport à la profondeur dans le cas où les systèmes d'enfichage et les parois latérales sont disposés verticalement à la plaque de distribution et que les parois extérieures sont entièrement déployées.

9. Dispositif de distribution selon l'une des revendications 2, 3 à 5, au cas où elles dépendent de la revendication 2, 6 à 8,
caractérisé en ce que
sur l'une des parois latérales (11,12) est ménagée une réserve (21) pour le passage d'un câble à fibres optiques venant de l'extérieur.

10. Dispositif de distribution selon l'une des revendications 2 à 9,
caractérisé en ce que
aux extrémités des parois latérales (11,12) opposées à la plaque de distribution est agencée une paroi arrière (13) qui relie les parois latérales au moyen de charnières (18,19) et peut être rabattue par rapport aux parois latérales de sorte à suivre le mouvement desdites parois et à se déplacer librement par rapport aux parois extérieures (23,24).
